# EUROPEAN PATENT SPECIFICATION

(11) **EP 1 593 442 B1**
(45) Date of publication and mention of the grant of the patent: **08.08.2007**
(21) Application number: 05445021.8
(22) Date of filing: 19.04.2005
(51) Int. Cl.: B21C 23/14

(54) **Method and device for manufacturing a drill blank or a mill blank**
Verfahren und Vorrichtung zur Herstellung eines Bohrer- oder Fräserrohlings
Méthode et dispositif de fabrication d'une ébauche de foret ou fraise

(30) Priority: 04.05.2004 SE 0401150
(43) Date of publication of application: 09.11.2005
(73) Proprietor: Sandvik Intellectual Property AB, 811 81 Sandviken (SE)
(72) Inventor: Kugelberg, Jören, 141 38 Huddinge (SE); Ericsson, Roine, 141 38 Huddinge (SE); Micski, Anders, 141 43 Huddinge (SE); Fair, Jonathan, Holbrooks, Coventry CV6 4PX (GB)
(74) Representative: Taquist, Henrik Lennart Emanuel

(56) References cited:
- WO-A-00/74870
- DE-A1- 3 636 798

## Description

### Technical Field of the Invention

The present invention relates to a method for manufacturing a drill blank or a mill blank by extrusion, said method comprising the forming of a first blank portion having external, helical chip flutes and the forming of a further blank portion in the shape of a shaft. The invention also relates to a device for manufacturing a drill blank or a mill blank. The drill blank or the mill blank is further treated in subsequent manufacturing steps to obtain a drill for chip removing machining.

### Prior Art

US-A-4,779,440 discloses a method for producing extruded drill blanks. The extruded drill blanks are equipped with external, helical grooves that serve as beginnings for the subsequent chip spaces of the drill. Preferably, the chip spaces are produced by grinding. The drill blanks are obtained by extruding a heated hard metal material through a nozzle. The drill blanks can be joined to a handle in a manner known per se.

WO 00/74870, which forms the basis for the preamble of claim 1, discloses a method for manufacturing a rotary tool such as a helix drill or an end mill for example, the method comprising the forming of a blank by an extrusion process. During the extrusion, a mixture is passed through a die which provides a cylindrical shape to the outer peripheral surface of the mixture. A plurality of jaws are disposed downstream of the die for conducting the mixture. Each jaw includes a helical ridge for engaging the outer surface of the extruded mass to cause a helical groove to be formed therein which constitutes a chip flute in the tool. During the extrusion, the jaws are moved away from the mixture to terminate formation of the chip grooves, whereby a shank portion of the tool is formed.

### Objects and Features of the Invention

A primary object of the present invention is to teach a method and a device for manufacturing a drill blank or a mill blank where a portion having at least one chip flute is produced initially and a shaft portion is produced subsequently.

A further object of the present invention is to use friction to control the formation of the shaft portion of the drill blank or the mill blank.

A still further object of the present invention is to vary, independently of each other, the length of the drill portion and the shaft portion.

### Brief Description of the Drawings

Below a preferred embodiment of the invention will be described, reference being made to the accompanying drawings, where:
- Fig. 1: shows a schematic side view of a device according to an embodiment of the present invention;
- Fig. 2: shows a schematic side view of the device according to Fig. 1, where a first step of the method according to the present invention is illustrated;
- Fig. 3: shows a schematic side view of the device according to Fig. 1, where a second step of the method according to the present invention is illustrated;
- Fig. 4: shows a schematic side view of the device according to Fig. 1, where a third step of the method according to the present invention is illustrated;
- Fig. 5: shows a schematic side view of the device according to Fig. 1, where a fourth step of the method according to the present invention is illustrated;
- Fig. 6: shows a schematic side view of the device according to Fig. 1, where a fifth step of the method according to the present invention is illustrated;
- Fig. 7: shows a schematic side view of the device according to Fig. 1, where a sixth step of the method according to the present invention is illustrated;
- Fig. 8: shows a schematic side view of the device according to Fig. 1, where a seventh step of the method according to the present invention is illustrated; and
- Fig. 9: shows a side view of a drill blank manufactured by the method and the device according to the present invention.

### Detailed Description of a Preferred Embodiment of the Invention.

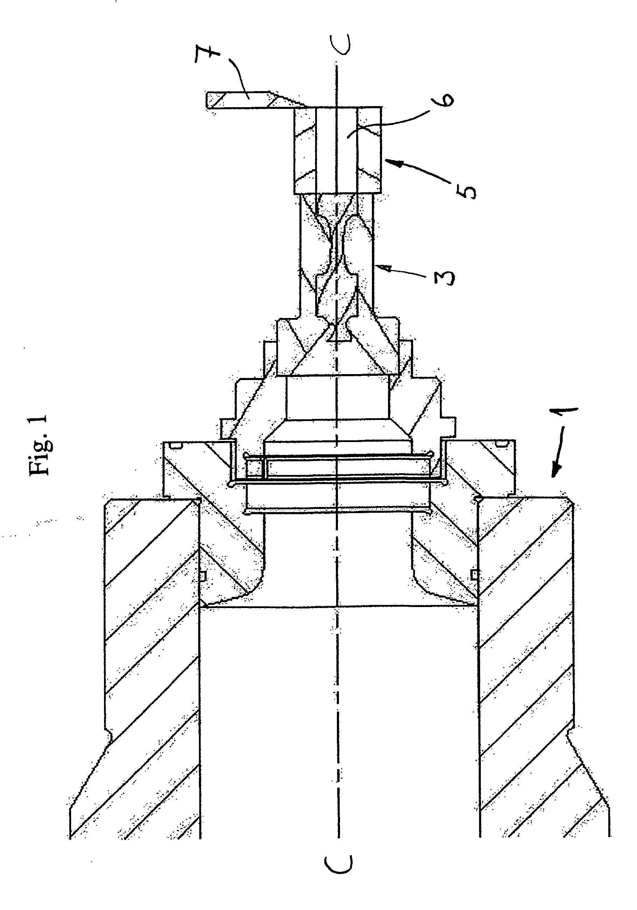

In Fig. 1 the design of a device according to the present invention is schematically disclosed, said device being used to carry out certain steps of the method according to the present invention, i.e., to produce blanks/green bodies for helical drills or milling bodies. The method according to the present invention comprises the preparation of a mixture of cemented carbide, cermet or ceramic powder and a carrier, feeding the mixture to the device according to Fig. 1 to produce a drill blank/green body which subsequently is sintered and machined. In this application, said mixture is called extruding mass. The device according to the present invention is in the shape of an extruding machine or extruder.

The extruder according to Fig. 1 comprises a housing 1 and a nozzle 3 that is attached to the housing 1. A sleeve 5 is connected to the free end of the nozzle 3, said sleeve 5 defining a cavity 6 that preferably has a cylindrical cross-sectional shape. In the area of the free end of the sleeve 5, a lid 7 is provided, said lid 7 being displaceable in a direction perpendicular to the axial direction C-C of the sleeve 5, said axial direction C-C being the axial direction also of the nozzle 3 and the housing 1. The displacement of the lid 7 closes (either completely or to an essential degree) the free end of the sleeve 5.

The suitable length of the sleeve 5 depends on various parameters, such as the consistency of the extruding mass and the internal surface friction. Generally, the length of the sleeve 5 is preferably shorter than the length of the shaft portion of the produced blank.

The device according to the present invention also comprises means (not shown) for transferring the extruding mass from the housing 1 and through the nozzle 3 and the sleeve 5.

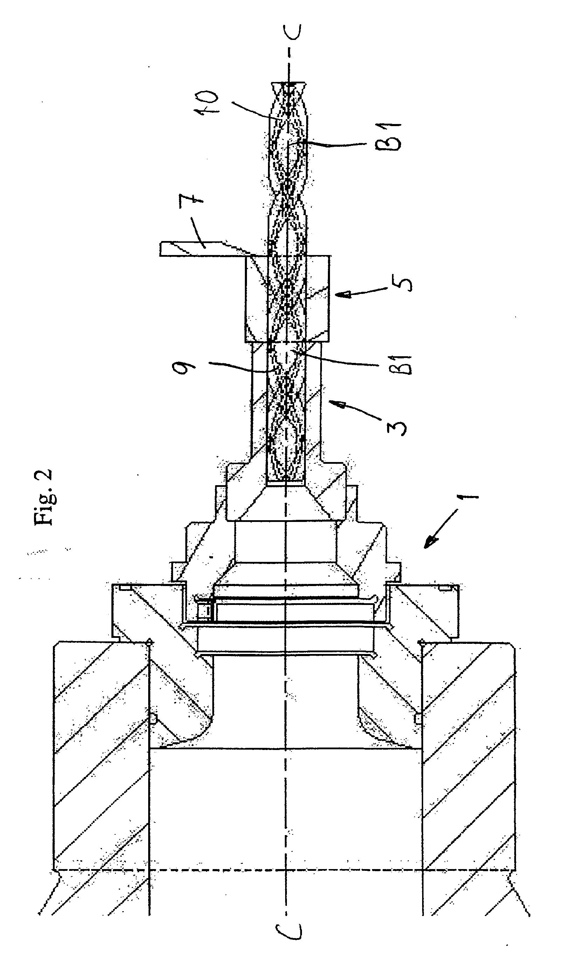

The interior of the nozzle 3 has the cross-section of a drill with external flutes and the interior of the nozzle 3 is twisted in longitudinal direction of the nozzle 3. Thus, the interior of the nozzle 3 has the geometry of a helical drill. This is indicated in Fig. 1. For clarity, this helical drill geometry is not indicated in the nozzle 3 in Figs. 2-8.

The nozzle 3 is also equipped with flexible filaments, said filaments being indicated in Figs. 2-8 by dotted lines 9. The filaments 9 are anchored upstream of the nozzle 3 by known technique. The filaments 9 have a longitudinal extension all the way up to the free end of the sleeve 5 where the ends of the filaments 9 are loose. The object of the filaments 9 is to produce internal cooling channels 10 in the blank.

When producing a green body/blank of the mixture fed from the housing 1 to the nozzle 3 the following steps are fulfilled. At the start of the extrusion, a helical first blank portion B1 is formed in the nozzle 3, the twisted shape being achieved due to the helical shape of the interior of the nozzle 3, i.e., the mixture that is fed from the housing 1 into the nozzle 3 will be rotated and assumes the shape of a drill body having external helical chip flutes. Simultaneously the filaments 9 are given a twisted configuration inside the blank that fills the nozzle 3.

As the extrusion continues, the helical blank B1 will leave the nozzle 3 and continue into the cavity 6. As is evident from Fig. 2, the first blank portion B1 will have a helical configuration also in the cavity 5 and consequently the filaments 9 will have a twisted configuration in the cavity 6. A further continuation of the extrusion results in the helical blank projecting from the free end of the sleeve 5, see Fig. 2.

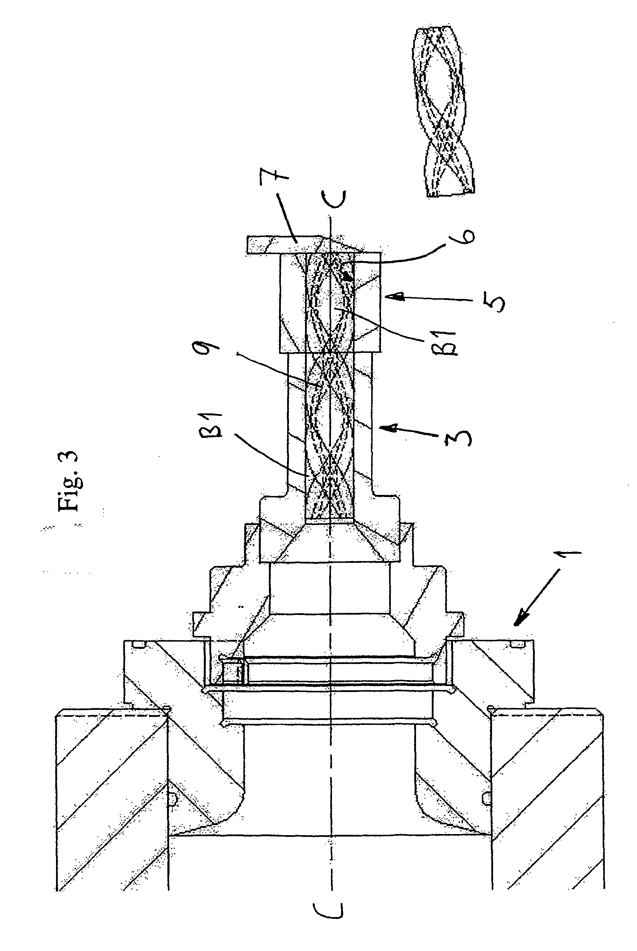

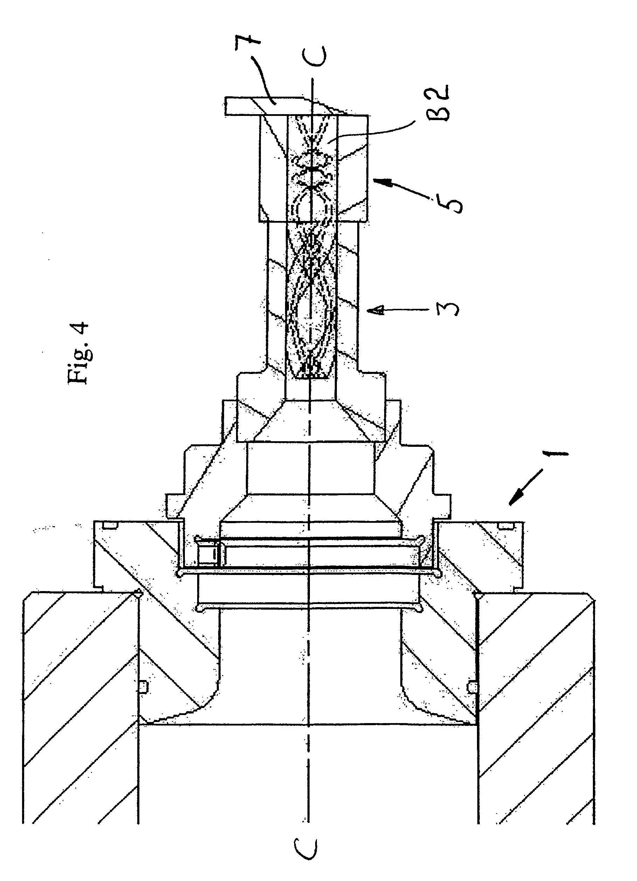

In a further step of the method according to the present invention, the lid 7 is displaced to a position, see Fig. 3, where the lid 7 seals the free end of the sleeve 5. The lid 7 is in the shape of a shearing means that cuts off the projecting part of the helical blank, see Fig. 3. Now, the free end of the blank abuts the lid 7. As the extrusion proceeds the external, preformed chip flutes of the blank are filled up inside the cavity 6. When the flutes are filled the pressure in the cavity 6 will increase and the helical filament structure could be disturbed, this being schematically illustrated in Fig. 4. The second portion of the blank having a disturbed filament structure is denominated B2. In this connection, it should be mentioned that it might be favourable that the lid 7 seals the free end of the sleeve 5 only partially, i.e., a certain amount of extruding mass is allowed to bypass the lid 7.

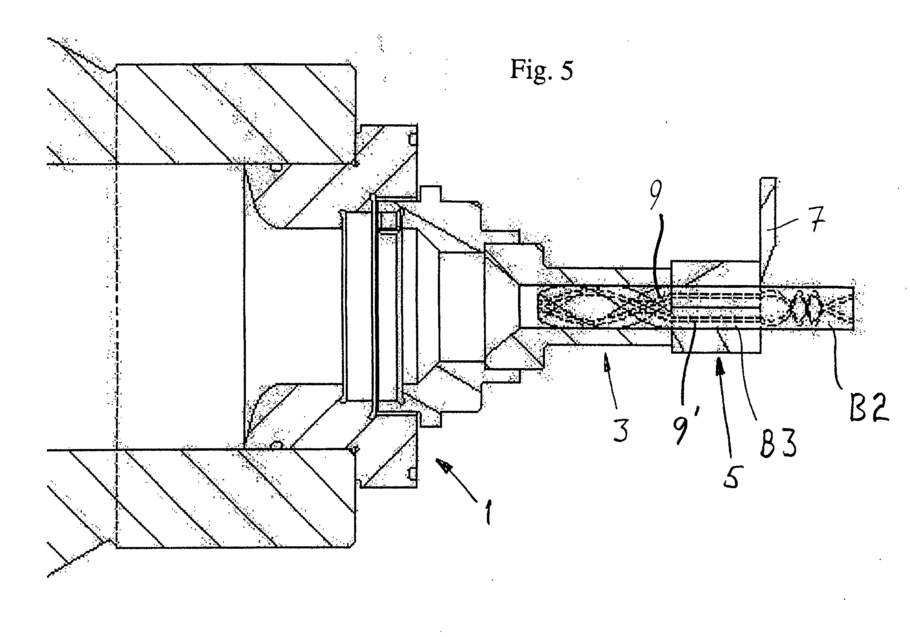

When the pressure has reached a certain level the lid 7 is again displaced to open the free end of the sleeve 5. This could be made automatically by introducing a pressure gauge (not shown) in the sleeve 5 that opens at a certain level of pressure. As is illustrated in Fig. 5, the second portion B2 of the blank having a disturbed filament structure is pushed out of the sleeve 5. Due to the friction between the extruding mass and the walls of the cavity 6, the mixture that fills up the cavity 6 will not be in the shape of a helical drill blank portion. Instead, a cylindrical shaft portion will continue to be formed by a substantially non-rotational extrusion in the cavity 6, this third portion of the blank being denominated B3. In this connection it should be pointed out that there is not an abrupt cessation of the rotation of the extruding mass when entering the sleeve 5. In fact, there is a progressive cessation of the rotation of the extruding mass.

If the friction between the interior of the cavity 6 and the extruding mass is low, it might be necessary to close the lid 7 to a certain extent when the second portion B2 of the blank is pushed out of the cavity 6. By such an arrangement the creation of a cylindrical shaft portion B3 will be facilitated.

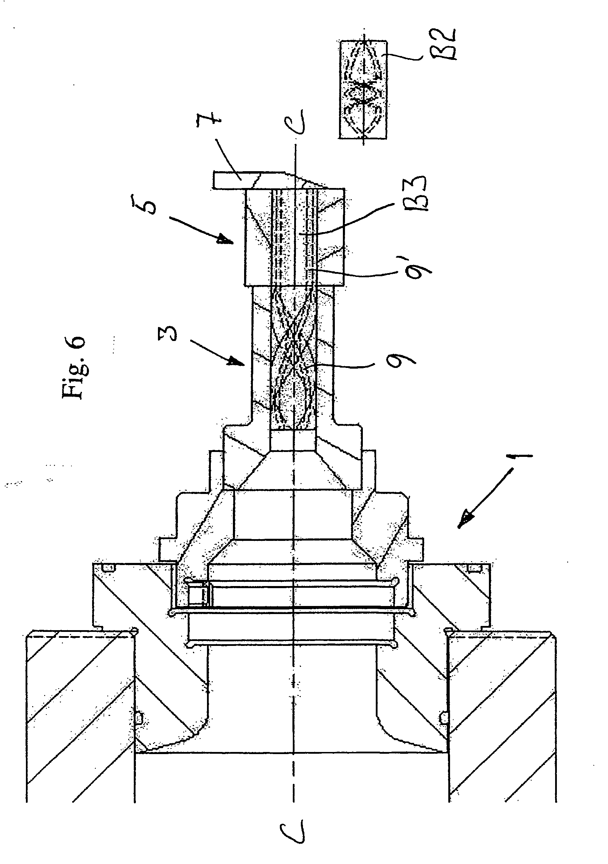

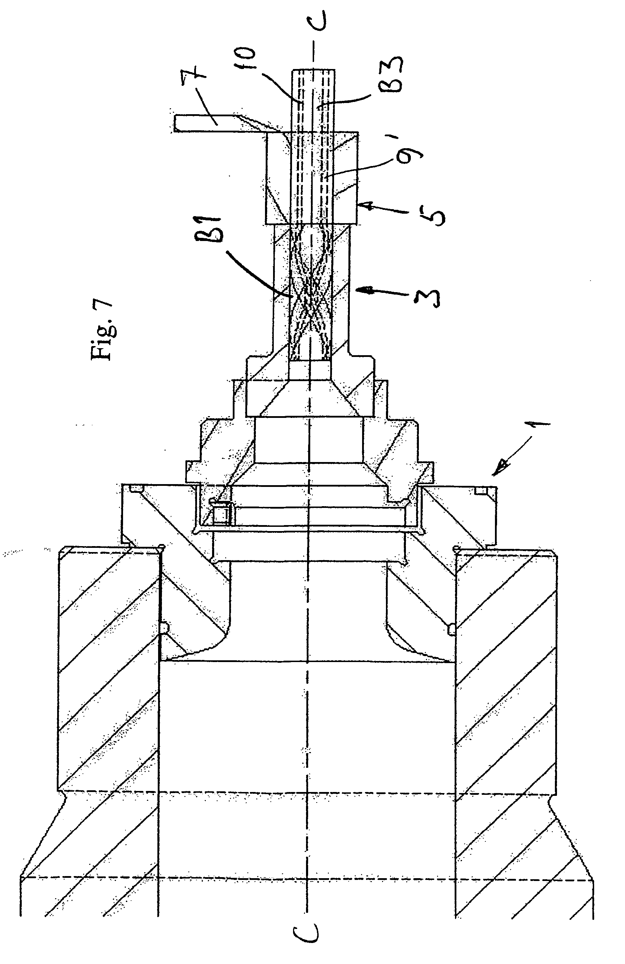

Due to the non-rotational performance of the extruding mass in the cavity 6, the filaments 9' have a substantially rectilinear extension inside the cavity 6. When the entire portion B2 is pushed out of the sleeve 5 the lid 7 is activated to perform its shearing function, i.e., the portion B2 is separated from the extrusion string, see Fig. 6. When the second blank portion B2 is separated from the extrusion string, the third blank portion B3 has a length corresponding to the length of the sleeve 5, see Fig. 6. However, by continuing the extrusion process the length of the third blank portion B3 may exceed the length of the sleeve 5, see Fig. 7. In order to continue the extrusion process, the lid 7 must be displaced from its position according to Fig. 6 to its position according to Fig. 7. During the continued extrusion process the length of the cylindrical third blank portion B3 is increased up to a desired value.

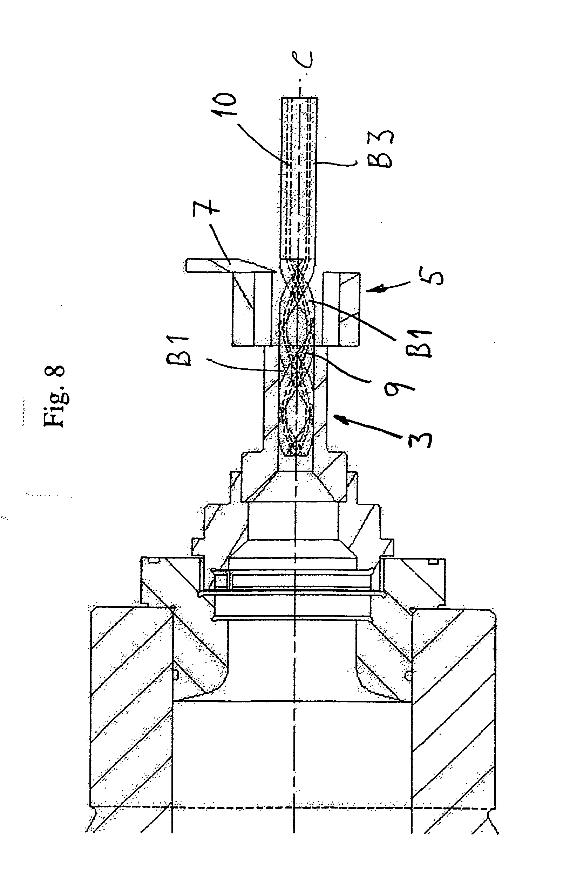

In order to continue the manufacturing of the first, helical blank portion B1, the friction between the cavity 6 and the extruding mass needs to be decreased. A preferred way to effect this is indicated in Fig. 8, i.e., the sleeve 5 is divided into two or more parts, where said parts may be distanced from each other in radial direction relative to the longitudinal direction C-C of the blank and the device according to the present invention. Thereby, the friction is reduced and the recreation of the first, helical blank portion B1 is effected when the extrusion process continues. When a desired length of the first blank portion B1 has been achieved, said portion B1 is cut off in a suitable way. The extrusion process then produces a new first blank portion B1. As regards the cutting off of the first portion B1 to create a drill blank and the continuation of the extrusion process, reference is made to Fig. 3.

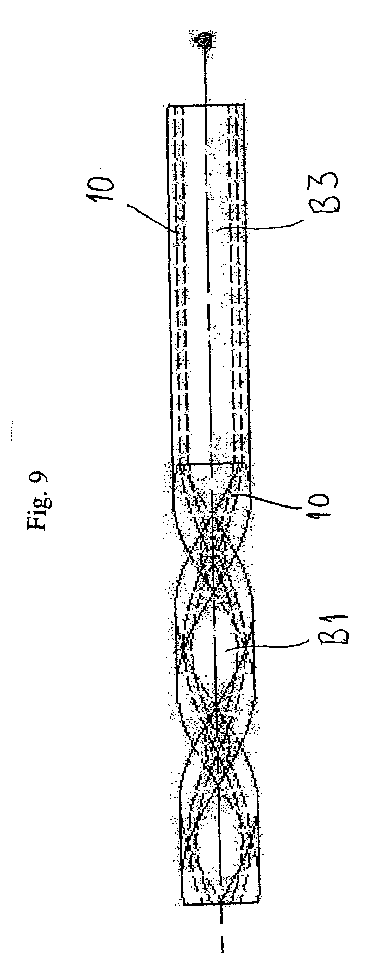

In Fig. 9, the drill blank achieved by the extrusion process described above is shown. The drill blank comprises a portion B1 having helical chip flutes and a shaft portion B3, preferably of cylindrical shape. Internal cooling channels 10 extend along the entire length of the drill blank, said internal cooling channels 10 being essentially rectilinear in the shaft portion B3.

The next step in the manufacturing process for the drill is to sinter the drill blank. Then the tip of the drill is machined to desired shape and dimension.

### Feasible Modifications of the Invention

In the embodiment described above, the drill blank is equipped with internal cooling channels. However, within the scope of the present invention it is also possible to manufacture a drill blank being void of internal cooling channels.

In the embodiment described above, the second blank portion B2 is cut off from the third blank portion B3, see Fig. 6. This step is carried out under the prerequisite that the second blank portion B2 holds a disturbed filament structure. However, if no internal cooling channels are to be produced in the blank, then there is no need to cut off the second blank portion B2. In this connection it should also be mentioned that during certain advantageous conditions it might be the case that the filaments are not disturbed when the extruding mass fills out the external flutes to produce the blank portion B2. This could be the case if rigid filaments are used for manufacturing of the internal cooling channels. In both these outlined situations the second blank portion B2 will constitute the shaft of the drill that is manufactured in accordance with the present invention.

In the embodiment described above the internal cooling channels 10 in the shaft portion B3 are essentially rectilinear. However, within the scope of the present invention the internal cooling channels may be somewhat twisted in the shaft portion B3. This may occur if the friction between the inner wall of the sleeve 5 and the extruding mass is relatively low.

In the embodiment described above, the diameter of the blank portion B1 is equal to the diameter of the blank portion B3. However, within the scope of the present invention the sleeve 5 may have a larger diameter than the diameter that is produced by the nozzle 3. It is also possible to manufacture the sleeve in a material that may be widened, e.g., polyurethane. By applying vacuum outside the sleeve 5 the internal diameter of the sleeve 5 may be increased.

In the embodiment described above the lid 7 performs both a closing function and a cutting function. However, within the scope of the present invention it is feasible that two separate means are provided, one performing closing and the other performing cutting.

In the embodiment described above, a blank for a helical drill is manufactured. However, the present invention may also be used to produce for instance deep hole drills that have rectilinear chip flutes and rectilinear internal cooling channels that both extend in axial direction of the drill. In such a case rigid filaments could be especially suitable.

In the embodiment described above, it is stated that the cavity 6 preferably has a cylindrical cross-sectional shape. It is feasible within the scope of the present invention that the cavity has a non-cylindrical cross-sectional shape. In an exemplifying and non-restricting purpose, a hexagonal cross-sectional shape may be mentioned.

## Claims

1. Method for manufacturing a drill blank or a mill blank by extrusion, said method comprising the forming of a first blank portion (B1) having external, axially extending external flutes and the forming of a further blank portion (B3) in the shape of a shaft, **characterized in** the following steps:
1) extruding a first blank portion (B1) having a free end and external flutes;
2) allowing the extrusion to continue in order to enter the free end and an adjacent portion of the first blank portion (B1) into a cavity (6) and sealing said cavity (6) in the area of the free end of the first blank portion (B1);
3) allowing the extrusion to continue to supply further extruding mass to the cavity (6), said supply of extruding mass completely filling out the external flutes of the first blank portion (B1) to produce a second blank portion (B2) integral with the first blank portion (B1);
4) allowing the extrusion to continue and the sealing to terminate in order to allow the second blank portion (B2) to be pushed out of the cavity (6);
5) allowing the extrusion to continue to produce a desired length of the first blank portion (B1); and
6) cutting off the first blank portion (B1) at the end facing away from the second blank portion (B2).

2. Method according to claim 1, **characterized in**
1) producing a third blank portion (B3) in the cavity (6) simultaneously as the second blank portion (B2) is pushed out of the cavity (6), said third blank portion (B3) being intermediate and integral with the first blank portion (B1) and the second blank portion (B2);
2) separating the second blank portion (B2) from the third blank portion (B3) when the second blank portion (B2) is outside the cavity (6); and
3) allowing the extrusion to continue to produce a desired length of the third blank portion (B3).

3. Method according to claim 1 , **characterized in that** the sealing of the cavity (6) is only partial.

4. Method according to any of claims 1-3,
**characterized in that** internal cooling channels are produced in the drill blank or the mill blank.

5. Method according to claim 2 or claim 4 when dependent on claim 2,
**characterized in that** when producing the third blank portion (B3) friction is established between the third blank portion (B3) and the cavity (6).

6. Device for manufacturing a drill blank or a mill blank by extrusion, said device comprising a housing (1), a nozzle (3) connected to said housing (1) and means to bring an extruding mass in the housing (1) to pass through the nozzle (3), said nozzle (3) having an internal space that is in the shape of a drill geometry with external, axially extending flutes,
**characterized in** a sleeve (5) defining a cavity (6), said sleeve (5) being attached to the nozzle (3), and a sealing and shearing means (7) being provided at the end of the sleeve (5) facing away from the nozzle (3), said sealing and shearing means (7) being able to at least partly seal the end of the sleeve (5) facing away from the nozzle (3).

7. Device according to claim 6, **characterized in that** the cavity (6) has a cross-section of circular shape.

8. Device according to claims 6 or 7,
**characterized in** filaments (9) provided inside the nozzle (3) and inside the sleeve (5), said filaments (9) being anchored upstream of the nozzle (3).

9. Device according to any of claims 6-8,
**characterized in that** the sealing and shearing means are in the shape of a lid (7) that is displaceable transverse to the longitudinal direction (C-C) of the device, and that the lid (7) is provided with a cutting edge.

## Patentansprüche

1. Verfahren zur Herstellung eines Bohrer- oder eines Fräserrohlings mit dem Bilden eines ersten Rohlingabschnittes (B1) mit äußeren, sich axial erstreckenden Außenrillen und dem Bilden eines weiteren Rohlingabschnittes (B3) in der Form eines Schaftes, **gekennzeichnet durch** die folgenden Schritte.
1) Extrudieren eines ersten Rohlingabschnittes (B1) mit einem freien Ende und Außenrillen;
2) Vorgeben der Fortsetzung der Extrusion, um das freie Ende und einen benachbarten Abschnitt des ersten Rohlingabschnittes (B1) In einen Hohlraum (6) einzugeben und den Hohlraum (6) in dem Bereich des freien Endes des ersten Rohlingabschnittes (B1) abzudichten;
3) Vorgeben der Fortsetzung der Extrusion für das Zuführen einer weiteren Extrudiermasse zu dem Hohlraum (6), wobei die Zufuhr der Extrudiermasse die Au-ßenrillen des ersten Rohlingsabschnittes (B1) vollständig ausfüllt, um einen mit dein ersten Rohlingabschnitt (B1) ganzheitlichen zweiten Rohlingabschnitt (B2) zu erzeugen;
4) Vorgeben der Fortsetzung der Extrusion und der Beendigung des Abdichtens, um es dem zweiten Rohlingabschnitt (82) zu ermöglichen, aus dem Hohlraum (6) ausgestoßen zu werden;
5) Vorgeben der Fortsetzung der Extrusion, um eine gewünschte Länge des ersten Rohlingabschnittes (B1)zu erzeugen; und
6) Abschneiden des ersten Rohlingabschnittes (B1) an demjenigen Ende, welches von dem zweiten Rohlingabschnitt (B2) fort gerichtet ist.

2. Verfahren nach Anspruch 1, **gekennzeichnet durch**
1) Erzeugen eines dritten Rohlingabschnittes (B3) in dem Hohlraum (6) gleichzeitig, wenn der zweite Rohlingabschnitt (B2) aus dem Hohlraum (6) ausgestoßen wird, wobei der dritte Rohlingabschnitt (B3) dazwischenliegend und ganzheitlich mit dem ersten Rohlingabschnitt (B1) und dem zweiten Rohlingabschnitt (B2) ist;
2) Trennen des zweiten Rohlingabschnittes (B2) von dem dritten Rohlingabschnitt (B3), wenn der zweite Rohlingabschnitt (B2) sich außerhalb des Hohlraumes (6) befindet; und
3) Vorgeben der Fortsetzung der Extrusion, um eine gewünschte Länge des dritten Rohlingabschnittes (B3) zu erzeugen.

3. Verfahren nach Anspruch 1, **dadurch gekennzeichnet, daß** das Abdichten des Hohlraumes (6) nur teilweise ist.

4. Verfahren nach einem der Ansprüche 1 bis 3, **dadurch gekennzeichnet, daß** Innenkühlkanäle in dem Bohrerrohling oder dem Fräserrohling erzeugt werden.

5. Verfahren nach Anspruch 2 oder Anspruch 4 bei Abhängigkeit von Anspruch 2, **dadurch gekennzeichnet, daß** wenn der dritte Rohlingabschnitt (B3) erzeugt wird, Reibung zwischen dem dritten Rohlingabschnitt (B3) und dem Hohlraum (6) hergestellt wird.

6. Vorrichtung zur Herstellung eines Bohrerrohlings oder eines Fräserrohlings durch Extrusion, wobei die Vorrichtung ein Gehäuse (1), eine Düse (3), die mit dem Gehäuse (1) verbunden ist, und Mittel aufweist, um eine Extrusionsmasse in dem Gehäuse (1) dazu zu bringen, durch die Düse (3) zu gelangen, welche einen Innenraum hat, der die Gestalt einer Bohrergeometrie hat mit äußeren, sich axial erstreckenden Rillen, **gekennzeichnet durch** eine Hülse (5), die einen Hohlraum (6) bildet und an der Düse (3) angebracht ist, und **durch** Abdicht- und Schermittel (7), die an demjenigen Ende der Hülse (5) vorgesehen sind, welches von der Düse (3) fort gerichtet ist, wobei die Abdicht- und Schermittel (7) in der Lage sind, dasjenige Ende der Hülse (5), welches von der Düse (3) fort gerichtet ist, mindestens teilweise abzudichten.

7. Vorrichtung nach Anspruch 6, **dadurch gekennzeichnet, daß** der Hohlraum (6) einen Querschnitt mit kreisförmiger Gestalt hat.

8. Vorrichtung nach Anspruch 6 oder 7, **gekennzeichnet durch** fadenförmige Elemente bzw. Filamente (9), die innerhalb der Düse (3) und innerhalb der Hülse (5) vorgesehen sind und aufstromig von der Düse (3) verankert sind.

9. Vorrichtung nach einem der Ansprüche 6 bis 8, **dadurch gekennzeichnet, daß** die Abdicht- und Schermittel in Gestalt eines Deckels (7) vorliegen, der quer zu der Längsrlchtung (C - C) der Vorrichtung verschiebbar und mit einer Schneidkante versehen ist.

## Revendications

1. Procédé de fabrication d'une ébauche de foret ou d'une ébauche de fraise par extrusion, ledit procédé comprenant la formation d'une première partie d'ébauche (B1) comportant des cannelures externes s'étendant de manière axiale et la formation d'une partie d'ébauche supplémentaire (B3) sous la forme d'un arbre, **caractérisé par** les étapes suivantes :
1) extruder une première partie d'ébauche (B1) comportant une extrémité libre et des cannelures externes;
2) laisser l'extrusion se poursuivre afin de faire pénétrer l'extrémité libre et une partie adjacente de la première partie d'ébauche (B1) à l'intérieur d'une cavité (6) et fermer ladite cavité (6) dans la zone de l'extrémité libre de la première partie d'ébauche (B1) ;
3) laisser l'extrusion se poursuivre pour fournir une masse d'extrusion supplémentaire à la cavité (6) , ladite fourniture de masse d'extrusion remplissant complètement les cannelures externes de la première partie d'ébauche (B1) pour produire une deuxième partie d'ébauche (B2) d'un seul tenant avec la première partie d'ébauche (B1) ;
4) laisser l'extrusion se poursuivre et la fermeture se terminer afin de permettre à la deuxième partie d'ébauche (B2) d'être poussée hors de la cavité (6) ;
5) laisser l'extrusion se poursuivre pour produire une longueur souhaitée de la première partie d'ébauche (B1) ; et
6) découper la première partie d'ébauche (B1) au niveau de l'extrémité opposée à la deuxième partie d'ébauche (B2).

2. Procédé selon la revendication 1, **caractérisé par** les étapes consistant à
1) produire une troisième partie d'ébauche (B3) dans la cavité (6) simultanément lorsque la deuxième partie d'ébauche (B2) est poussée hors de la cavité (6), ladite troisième partie d'ébauche (B3) se situant entre, et d'un seul tenant avec, la première partie d'ébauche (B1) et la deuxième partie d'ébauche (B2) ;
2) séparer la deuxième partie d'ébauche (B2) de la troisième partie d'ébauche (B3) lorsque la deuxième partie d'ébauche (B2) se trouve à l'extérieur de la cavité (6) ; et
3) laisser l'extrusion se poursuivre pour produire une longueur souhaitée de la troisième partie d'ébauche (B3).

3. Procédé selon la revendication 1, **caractérisé en ce que** la fermeture de la cavité (6) est uniquement partielle.

4. Procédé selon l'une quelconque des revendications 1 à 3, **caractérisé en ce que** des canaux de refroidissement internes sont produits dans l'ébauche de foret ou l'ébauche de fraise.

5. Procédé selon la revendication 2 ou la revendication 4 lorsqu'elle dépend de la revendication 2, **caractérisé en ce que**, lors de la production de la troisième partie d'ébauche (B3), un frottement est établi entre la troisième partie d'ébauche (B3) et la cavité (6).

6. Dispositif de fabrication d'une ébauche de foret ou d'une ébauche de fraise par extrusion, ledit dispositif comprenant un logement (1), une buse (3) raccordée audit boîtier (1) et des moyens pour amener une masse d'extrusion dans le boîtier (1) à traverser la buse (3), ladite buse (3) comportant un espace interne qui se présente sous la forme d'une géométrie de fraise avec des cannelures externes s'étendant de manière axiale, **caractérisé par** un manchon (5) définissant une cavité (6), ledit manchon (5) étant fixé à la buse (3), et un moyen de fermeture et de cisaillement (7) étant prévu au niveau de l'extrémité du manchon (5) opposée à la buse (3), ledit moyen de fermeture et de cisaillement (7) étant apte à au moins fermer partiellement l'extrémité du manchon (5) opposée à la buse (3).

7. Dispositif selon la revendication 6, **caractérisé en ce que** la cavité (6) comporte une coupe transversale de forme circulaire.

8. Dispositif selon les revendications 6 ou 7, **caractérisé par** des filaments (9) prévus à l'intérieur de la buse (3) et à l'intérieur du manchon (5), lesdits filaments (9) étant fixés en amont de la buse (3).

9. Dispositif selon l'une quelconque des revendications 6 à 8, **caractérisé en ce que** le moyen de fermeture et de cisaillement se présente sous la forme d'un couvercle (7) mobile transversalement vers la direction longitudinale (C-C) du dispositif, et **en ce que** le couvercle (7) est muni d'une arête de coupe.
